# EUROPÄISCHE PATENTSCHRIFT

(11) **EP 3 140 161 B1**
(45) Veröffentlichungstag und Bekanntmachung des Hinweises auf die Patenterteilung: **17.10.2018**
(21) Anmeldenummer: 15722057.5
(22) Anmeldetag: 31.03.2015
(51) Int. Cl.: B60R 21/203, B62D 1/11, B62D 1/18, B60R 21/217

(54) **LENKRADANORDNUNG MIT EINEM AIRBAG, ZUGEHÖRIGES KRAFTFAHRZEUG UND BETRIEBSVERFAHREN**
STEERING WHEEL ARRANGEMENT WITH AN AIRBAG, MOTOR VEHICLE WITH SUCH ARRANGEMENT AND METHOD THEREFOR
ENSEMBLE VOLANT DE DIRECTION ÉQUIPÉ D'UN COUSSIN GONFLABLE, VÉHICULE ASSOCIÉ ET PROCÉDÉ DE FONCTIONNEMENT

(30) Priorität: 06.05.2014 DE 102014006550
(43) Veröffentlichungstag der Anmeldung: 15.03.2017
(73) Patentinhaber: Audi AG, 85045 Ingolstadt (DE)
(72) Erfinder: KRAUSE, Harald, 85055 Ingolstadt (DE); HAGEMANN, Franz-Michael, 85120 Hepberg (DE)
(74) Vertreter: Thielmann, Frank
(86) Internationale Anmeldenummer: PCT/EP2015/000691
(87) Internationale Veröffentlichungsnummer: WO 2015/169411

(56) Entgegenhaltungen:
- WO-A1-01/44026
- WO-A1-2010/121091
- DE-A1- 19 607 193
- JP-A- 2005 112 130
- US-A1- 2003 195 685

## Beschreibung

Die Erfindung betrifft eine Lenkradanordnung mit einem einen Airbag aufweisenden Lenkrad, ein Kraftfahrzeug umfassend eine solche Lenkradanordnung und ein Verfahren zum Betreiben einer Lenkradanordnung mit einem einen Airbag aufweisenden Lenkrad.

Es ist bekannt, dass moderne Fahrzeuge einen Fahrerairbag aufweisen. Dieser ist üblicherweise im Lenkrad angeordnet und wird bei einer Kollision der Fahrzeugfront explosionsartig aufgeblasen. Dadurch entsteht ein zum Fahrer hin gerichtetes Polster, welches ihn abstützt und die durch den Frontalaufprall hervorgerufenen Trägheitskräfte aufnimmt.

Herkömmliche Airbags sind fest im Lenkrad des Kraftfahrzeugs verbaut. Dies hat zur Folge, dass der Airbag während einer Lenkbewegung mit dem Lenkrad mitgedreht wird. Führt der Fahrer kurz vor einer Kollision noch Lenkeingriffe aus, so wird das Lenkrad und der damit fest verbundene Airbag ausgelenkt. Zudem ist es möglich, dass während der Kollision die Räder aufgrund einer Interaktion mit einem an der Kollision beteiligten Gegenstand oder einem Fahrzeug eine Veränderung der Position erfahren, wodurch ein geänderter Lenkwinkel auf das Lenkrad übertragen wird. Dies führt ebenfalls dazu, dass das Lenkrad im Moment der Kollision in einer undefinierten Stellung steht. Daher sind im Lenkrad angeordnete Airbags üblicherweise rotationssymmetrisch ausgebildet, da der Lenkwinkel des Lenkrads zum Zeitpunkt der Kollision dann keinen Einfluss auf den Öffnungsvorgang des Airbags hat.

WO2010121091 zeigt eine Lenkradanordnung nach dem Oberbegriff des Anspruchs 1 und ein Verfahren nach dem Obergriff des Anspruchs 8. Der Erfindung liegt die Aufgabe zugrunde, eine Lenkradanordnung anzugeben, die eine Anpassung der Auslösung des Airbags an unterschiedliche Unfallsituationen ermöglicht.

Zur Lösung dieser Aufgabe ist bei einer Lenkradanordnung der eingangs genannten Art erfindungsgemäß nach Anspruch 1 vorgesehen, dass die Lenkradanordnung wenigstens einen von einer Steuerungseinrichtung ansteuerbaren Aktor zum Bewegen des Airbags oder des den Airbag aufweisenden Lenkrads aufweist, wobei die Steuerungseinrichtung so ausgebildet ist, dass sie bei einer bevorstehenden Auslösung des Airbags den Aktor so ansteuert, dass dieser den Airbag oder das den Airbag aufweisende Lenkrad in eine für die Auslösung des Airbags günstige Position bewegt.

Um dies zu erreichen, wird bei bevorstehender Auslösung des Airbags ein Aktor von einer Steuerungseinrichtung angesteuert, welcher den Airbag oder das mit dem Airbag verbundene Lenkrad in eine zum Schutz des Fahrers vorteilhafte Position bewegt, wobei der Airbag relativ zum Lenkrad mittels des Aktors um die Drehachse des Lenkrads drehbar im oder am Lenkrad angeordnet ist.

Eine zweckmäßige Weiterbildung der Erfindung kann vorsehen, dass der Steuerungseinrichtung eine unvermeidbare Kollision betreffende Informationen von einer Vorrichtung zur Erfassung des Fahrzeugumfelds zuführbar sind. Dies können beispielsweise Radarsensoren sein, welche Daten über Position und Geschwindigkeit von möglichen Hindernissen im Fahrzeugumfeld zur Verfügung stellen. Die Informationen können außerdem über im Fahrzeug integrierte Kameras für infrarotes oder sichtbares Licht sowie 3D-Kameras eingesetzt werden. Werden die Informationen eine unvermeidbare Kollision betreffend von einer solchen Quelle an die Steuerungseinrichtung zugeführt, kann diese durch entsprechende Ansteuerung des Aktors dafür sorgen, dass der Airbag oder das den Airbag aufweisende Lenkrad in eine Position bewegt wird, die bei Auslösen des Airbags eine optimale Schutzwirkung für den Fahrer bietet.

Dafür ist es zweckmäßig, dass der Airbag kippbar in oder am Lenkrad angeordnet ist. Durch diese Einstellungsmöglichkeit der Ausrichtung des Airbags und dessen Lagerung ist es vor dem Auslösen möglich, den Airbag relativ zum Lenkrad zu verkippen, um dadurch trotz der Lenkeingriffe des Fahrers den Airbag in einer definierten Stellung aufblasen zu können. Dies ermöglicht bei der Verwendung eines asymmetrischen Airbags, welcher durch seine Formgebung beispielsweise speziell den Kopf und Nackenbereich des Fahrers schützt, dass der Airbag in der vorher definierten Stellung aufgeblasen wird.

Eine weitere zweckmäßige Weiterbildung der Erfindung sieht vor, dass die Lenkradanordnung ein Mittel zum Entkoppeln des den Airbag aufweisenden Lenkrads von einer Lenkung eines Kraftfahrzeugs aufweist. Ein solches Mittel kann beispielsweise eine Kupplung sein, die bei einer erfassten unvermeidbaren Kollision, vor Auslösen des Airbags, das Lenkrad von der Lenkung abkoppelt und dadurch sicherstellt, dass Interaktionen der Vorderräder in der Crashdynamik nicht mehr auf das Lenkrad übertragen werden können. Durch diese Ausgestaltung wird das Lenkrad des Fahrzeugs bei einem Aufprall nicht durch auf die Räder wirkende Kräfte aus seiner Stellung bewegt. Eine weitere Ausgestaltung der erfindungsgemäßen Lenkradanordnung kann darin bestehen, dass der Airbag in einem gefalteten Zustand und/oder in einem aufgeblasenen Zustand quaderförmig ist. Dies wird durch die Positionierung des Lenkrads oder des Airbags vor dem Auslösen des Airbags ermöglicht, da beim Auslösen des Airbags somit eine definierte Position erreicht ist. Eine rotationssymmetrische Form des Airbags, welche anderenfalls eingesetzt werden muss, ist in diesem Fall nicht nötig.

Eine zweckmäßige Weiterbildung dieser Ausgestaltung kann vorsehen, dass die Form des Airbags unsymmetrisch ist und vorzugsweise eine Ausbuchtung aufweist. Durch die Ausbildung des Airbags in einer solchen asymmetrischen Form wird erreicht, dass in einer Kollision besonders gefährdete Bereiche des Körpers des Fahrers zusätzlichen Schutz erfahren können. So kann der Airbag vorzugsweise im aufgeblasenen Zustand eine Ausbuchtung aufweisen, welche den Kopf und Nackenbereich des Fahrers bei einem Aufprall aufnimmt. Weiterhin ist ein seitlich verbreiteter Airbag, der den Schulterbereich des Fahrers besser abdeckt sowie ein Airbag der den Brustbereich und lebenswichtige Organe des Fahrers schützt, ausführbar.

Des Weiteren betrifft die Erfindung ein Verfahren nach Anspruch 8 zum Betreiben einer Lenkradanordnung mit einem einen Airbag aufweisenden Lenkrad.

Bei dem erfindungsgemäßen Verfahren ist vorgesehen, dass die Lenkradanordnung wenigstens einen von einer Steuerungseinrichtung ansteuerbaren Aktor aufweist, welcher den Airbag oder das den Airbag aufweisende Lenkrad bewegt, wobei die Steuerungseinrichtung den Aktor bei einer bevorstehenden Auslösung des Airbags so ansteuert, dass dieser den Airbag oder das den Airbag aufweisende Lenkrad in eine zum Auslösen des Airbags günstige Position bewegt.

Nach dem Erfassen der eine unvermeidbare Kollision betreffenden Information werden diese der Steuerungseinrichtung zugeführt. Diese steuert wenigstens einen Aktor an, welcher den Airbag vor dessen Auslösung oder das den Airbag aufweisende Lenkrad in eine Position bewegt, in der die Schutzwirkung des Airbags für den Fahrer maximiert, wobei der Aktor den Airbag um die Drehachse des Lenkrads relativ zum Lenkrad in eine neutrale Position dreht.

Weiterhin kann vorgesehen sein, dass der Abstand zwischen Lenkrad und Fahrer bei einer erkannten unvermeidbaren Kollision ebenfalls angepasst wird. Dadurch kann eine Fehleinstellung des Lenkrads noch kurz vor dem unvermeidbaren Aufprall behoben werden. Zusätzlich dazu kann der Airbag oder das den Airbag aufweisende Lenkrad um eine Achse verkippt werden. Dies kann zum einen um die Hochachse des Airbags geschehen, zum anderen kann der Airbag um die Achse, welche in der Meridionalebene des Airbags liegt, also in der Fahrzeuglängsebene verkippt werden. Durch diesen Mechanismus ist es möglich, die aus einer Vorrichtung zur Erfassung des Fahrzeugumfelds gewonnenen Daten eine unvermeidbare Kollision betreffend dahingehend umzusetzen, dass der Airbag je nach Unfallsituation so ausgelöst wird, dass er dem Fahrer maximalen Schutz bietet.

Weitere Vorteile und Einzelheiten der Erfindung werden anhand eines Ausführungsbeispiels unter Bezugnahme auf die Zeichnungen beschrieben. Die Zeichnungen sind schematische Darstellungen und zeigen:
- Fig. 1: ein Ausführungsbeispiel eines Kraftfahrzeugs mit einer erfindungsgemäßen Lenkradanordnung;
- Fig. 2: ein Ausführungsbeispiel des Lenkrads der erfindungsgemäßen Lenkradanordnung in Frontalansicht;
- Fig. 3: ein Ausführungsbeispiel des Lenkrads der erfindungsgemäßen Lenkradanordnung; und
- Fig. 4: ein Flussdiagramm des erfindungsgemäßen Verfahrens.

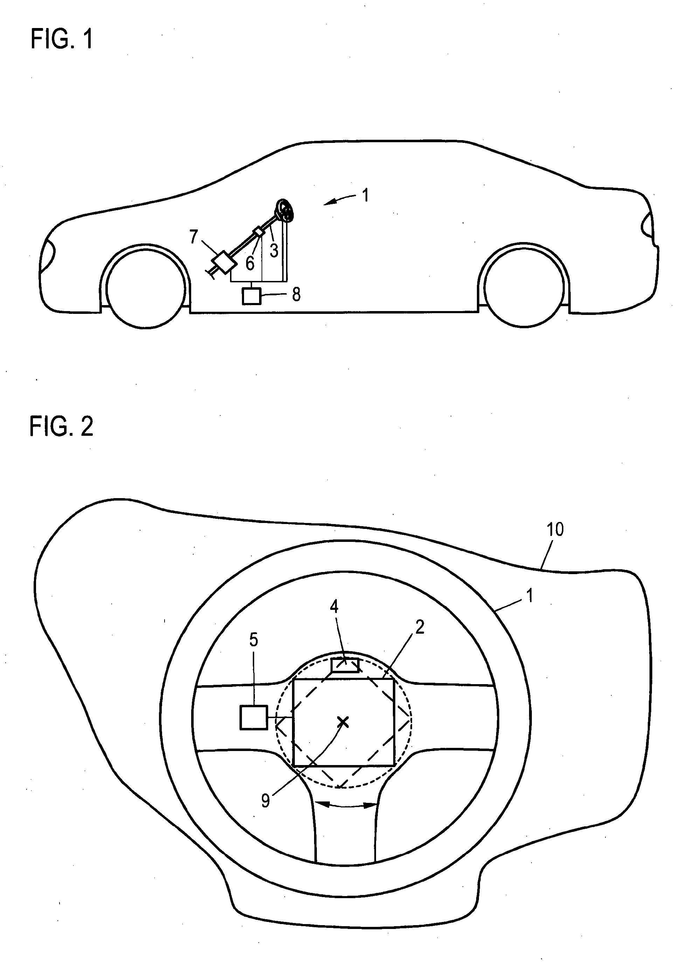

Fig. 1 zeigt ein Kraftfahrzeug mit einer Lenkradanordnung, umfassend ein Lenkrad 1 mit einem in diesem Ausführungsbeispiel integrierten Airbag 2, welcher rechteckig ausgebildet ist. An das Lenkrad 1 schließt eine Lenksäule 3 an. Im Lenkrad 1 sind zwei Aktoren 4 und 5 am Airbag 2 angeordnet. Hierbei ist der Aktor 4 dazu ausgebildet, den Airbag 2 vor dessen Auslösung um dessen Mittelpunkt 9 in eine neutrale Position zu drehen.

Dieser Vorgang ist im Detail in Fig. 2 abgebildet. Diese zeigt eine vergrößerte Abbildung des Lenkrads 1 von vorne. Hierbei ist deutlich erkennbar, dass der Aktor 4 den Airbag 2 aus einer zuvor ausgelenkten Position, welche gepunktet gezeichnet ist, um den Mittelpunkt 9 des Airbags 2 entlang des gestrichelt eingezeichneten Kreises in eine zuvor definierte Position bewegt. Abhängig von der Richtung, in welche das Lenkrad 1 ausgelenkt wurde, wird der Airbag,2 durch den Aktor 4 auf dem kürzeren Weg in die Position gebracht.

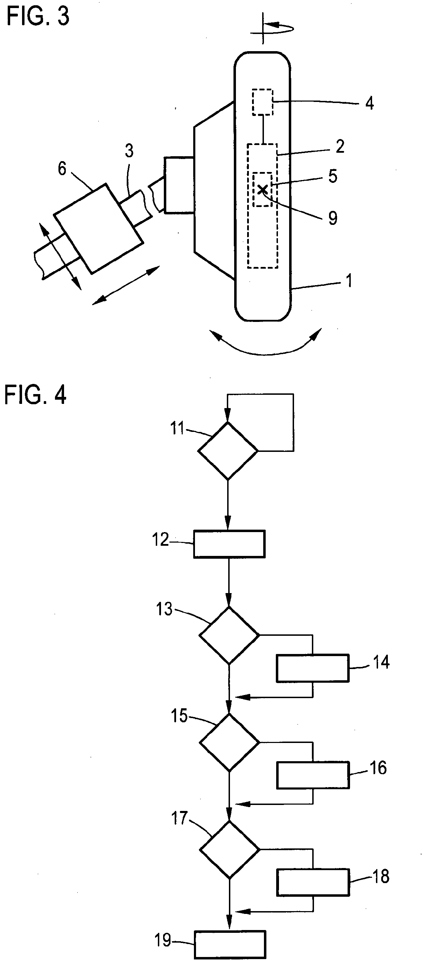

Des Weiteren ist in Fig. 2 der Aktor 5 abgebildet, welcher in diesem Ausführungsbeispiel ebenfalls direkt am Airbag 2 im Lenkrad 1 angeordnet ist. Der Aktor 5 steuert die Verkippung des Airbags 2 relativ zum Lenkrad 1. Dies kann zum einen um die Hochachse des Airbags 2 geschehen, wie am besten in Fig. 3 zu sehen ist, welche das Lenkrad 1 von der Seite zeigt. Die Hochachse erstreckt sich senkrecht durch den Mittelpunkt 9 des Airbags 2. Zusätzlich kann der Aktor 5 den dreh- und kippbar gelagerten Airbag 2 bezüglich der Achse verkippen, die ebenfalls durch den Mittelpunkt 9 des Airbags 2 verläuft und in Fig. 3 aus der Zeichenebene heraus verläuft. Durch diese beiden Verkippungsmechanismen ist es möglich, flexibel auf viele Unfallsituationen zu reagieren, wobei es sich nicht um einen Frontalaufprall handeln muss. So kann beispielsweise eine Kollision, welche aus einer Überlagerung einer Vorwärtsbewegung mit einem seitlichen Aufprall besteht, für den Fahrer dahingehend abgeschwächt werden, dass der Aktor 5 den Airbag 2 in die Richtung des seitlichen Aufpralls bezüglich der Hochachse verkippt, so dass die durch den seitlichen Aufprall erzeugte Trägheitskraft vom Airbag 2 kompensiert wird.

Zusätzlich ist in Fig. 2 die Kontur 10 des Airbags 2 im aufgeblasenen Zustand dargestellt. Hierbei wird deutlich, dass die Form des Airbags 2 stark von einer rotationssymmetrischen Form abweichen kann. In diesem Ausführungsbeispiel wurde eine weitgehend rechteckige Form gewählt, um den Fahrer seitlich vom Lenkrad im Schulterbereich gut abzustützen. Zusätzlich ist der Airbag 1 nach unten rechteckig verlängert, um den Bereich des Brustbeins des Fahrers und damit lebenswichtige Organe zu schützen. Zusätzlich weist die Kontur 10 des aufgeblasenen Airbags 1 eine Ausbuchtung auf, die den Kopf und den Nackenbereich des Fahrers bei einem unvermeidbaren Aufprall schützt.

Daneben ist in Fig. 1 der Aktor 6 dargestellt, welcher für die Positionierung des Lenkrads 1 und des darin angeordneten Airbags 2 durch eine Verstellung der Lenksäule 3 senkrecht in Richtung der Hochachse, sowie eine Verstellung des Abstands zwischen dem Lenkrad 1 und dem Fahrer ermöglicht. Aufgrund dieser Verstellmöglichkeit ist eine Kompensation eines zuvor ungünstig eingestellten Lenkrads möglich. Dadurch kann vor einer unvermeidbaren Kollision das Lenkrad 1 in eine günstige Position gebracht und der Fahrer so bestmöglich geschützt werden.

Außerdem ist in Fig. 1 der Aktor 7 dargestellt, welcher im Falle einer unvermeidbaren Kollision das Lenkrad 1 von der Lenkung und den damit verbundenen Vorderrädern entkoppelt. Durch diese Entkopplung wird eine Interaktion der Räder während des Aufpralls nicht auf das Lenkrad 1 übertragen. Dies hat zum einen den Vorteil, dass der Fahrer nicht durch die über die Räder auf das Lenkrad 1 übertragenen Kräfte verletzt werden kann und zum anderen, dass das Lenkrad 1 und der damit verbundene Airbag 2 nicht aus der definierten Position ausgelenkt werden können.

Die Steuerungseinrichtung 8, welche im Kraftfahrzeug angeordnet ist, steuert die Aktoren 4 bis 7, wenn eine unvermeidbare Kollision von einer Vorrichtung zum Erfassen des Fahrzeugumfelds erfasst wurde, entsprechend der vorliegenden Unfallsituation an.

Fig. 4 zeigt ein Flussdiagramm des erfindungsgemäßen Verfahrens zum Betreiben der Lenkradanordnung mit einem einen Airbag aufweisenden Lenkrad. Zunächst wird in Block 11 erfasst, ob eine unvermeidbare Kollision bevorsteht, bzw. ob der Airbag ausgelöst werden muss. Diese Abfrage kann ergeben, dass entweder eine oder keine unvermeidbare Kollision bevorsteht. Falls keine Kollision bevorsteht, wird wieder auf Block 11 verzweigt. Da diese Abfrage, und damit die Erfassung des Fahrzeugumfelds bevorzugt kontinuierlich verläuft, wird die Abfrage in Block 11 solange ausgeführt, bis eine unvermeidbare Kollision erfasst wurde. Ist dies der Fall wird von Block 11 auf Block 12 verzweigt.

In Block 12 wird der in Fig. 1 gezeigte Aktor 7 von der Steuerungseinrichtung 8 angesteuert. Dadurch wird das Lenkrad 1 von der Lenkung entkoppelt. Dies verhindert, dass die während des Aufpralls auf die Vorderräder wirkenden Kräfte auf das Lenkrad 1 übertragen werden. Anschließend wird von Block 12 auf Block 13 verzweigt, in welchem abgefragt wird, ob der Airbag 2 aus der zum Auslösen des Airbags definierten Position ausgelenkt ist. Ist dies der Fall, wird von Block 13 auf Block 14 verzweigt.

In Block 14 wird der in Fig. 2 gezeigte Aktor 4 von der Steuerungseinrichtung 8 angesteuert. Der Aktor 4 bewirkt, dass der Airbag 2, abhängig von der Richtung, in die das Lenkrad 1 gedreht wurde, in die zuvor definierte Position zurückgeführt wird. Nachdem Block 14 abgearbeitet wurde, wird auf Block 15 verzweigt. Es wird selbstverständlich ebenfalls zu Block 15 verzweigt, falls der Airbag 2 von vornherein nicht aus der neutralen Position ausgelenkt wurde. In beiden Fällen ist es zweckmäßig, dass der Airbag 2, nachdem die neutrale Position festgestellt wurde oder nachdem er durch den Aktor 4 in die neutrale Position gedreht wurde, durch den Aktor 4 in der dieser Position gehalten wird. In Block 15 wird schließlich abgefragt, inwieweit ein durch die Unfallsituation bestimmtes Verkippen des Airbags 2 erforderlich ist.

Die Abfrage in Block 15 kann ergeben, dass ein oder kein Verkippen erforderlich ist. In diesem Fall wird von Block 15 auf Block 16 verzweigt. In Block 16 wird der Aktor 5 von der Steuerungseinrichtung 8 angesteuert. Falls ein Aufprall mit einer Überlagerung aus Vorwärtsbewegung und seitlichem Aufprall vorliegt, wird der Aktor 5 so angesteuert, dass der Airbag 2 in die Richtung verkippt wird, aus welcher der seitliche Aufprall stattfindet. Besteht der Aufprall aus einer reinen Vorwärtsbewegung oder wurde Block 16 durchlaufen, wird auf Block 17 verzweigt.

In Block 17 wird schließlich abgefragt, ob die Höhe des Lenkrads 1 und dessen Entfernung zum Fahrer richtig eingestellt sind. Sofern dies nicht der Fall ist, führt der Weg im Flussdiagramm zu Block 18,in welchem der Aktor 6 von der Steuerungseinrichtung 8 angesteuert wird. Mithilfe des Aktors 6 kann über die Lenksäule 3 die Höhe des Lenkrads 1 eingestellt werden. Zusätzlich kann über den Aktor 6 und über die Lenksäule 3 der Abstand des Lenkrads 1 vom Fahrer reguliert werden. Auf diese Weise kann ein zuvor ungünstig eingestelltes Lenkrad 1 kurz vor einer unvermeidbaren Kollision in eine günstigere Position bewegt werden. Wurde die Höhe und die Entfernung des Lenkrads 1 zum Fahrer durch den Aktor 6 erfolgreich angepasst oder waren beide Werte schon vorher korrekt eingestellt, so wird von Block 17 bzw. von Block 18 auf Block 19 verzweigt.

In Block 19 liegt der Zustand vor, dass das Lenkrad 1 und der damit verbundene Airbag 2 in einer zum Auslösen des Airbags günstigen Position angeordnet sind.

## Patentansprüche

1. Lenkradanordnung, mit einem einen Airbag (2) aufweisenden Lenkrad (1), wobei die Lenkradanordnung wenigstens einen von einer Steuerungseinrichtung (8) ansteuerbaren Aktor (4, 5, 6) zum Bewegen des Airbags (2) oder des den Airbag (2) aufweisenden Lenkrads (1) aufweist, wobei die Steuerungseinrichtung (8) so ausgebildet ist, dass sie bei einer bevorstehenden Auslösung des Airbags (2) den Aktor (4, 5, 6) so ansteuert, dass dieser den Airbag (2) oder das den Airbag (2) aufweisende Lenkrad (1) in eine zum Auslösen des Airbags (2) günstige Position bewegt,
**dadurch gekennzeichnet,**
**dass** der Airbag (2) relativ zum Lenkrad (1) mittels des Aktors (4) um die Drehachse des Lenkrads (1) drehbar im oder am Lenkrad (1) angeordnet ist.

2. Lenkradanordnung nach Anspruch 1,
**dadurch gekennzeichnet,**
**dass** der Steuerungseinrichtung (8) eine bevorstehende Auslösung des Airbags (2) betreffende Informationen von einer Vorrichtung zur Erfassung des Fahrzeugumfelds zuführbar sind.

3. Lenkradanordnung nach Anspruch 1 oder 2,
**dadurch gekennzeichnet,**
**dass** der Airbag (2) kippbar in oder am Lenkrad (1) angeordnet ist.

4. Lenkradanordnung nach einem der vorangehenden Ansprüche,
**dadurch gekennzeichnet,**
**dass** sie ein Mittel (7) zum Entkoppeln des den Airbag (2) aufweisenden Lenkrads (1) von einer Lenkung aufweist.

5. Lenkradanordnung nach einem der vorangehenden Ansprüche,
**dadurch gekennzeichnet,**
**dass** der Airbag (2) ein einem gefalteten Zustand und/oder in einem aufgeblasenen Zustand (10) quaderförmig ist.

6. Lenkradanordnung nach einem der vorangehenden Ansprüche,
**dadurch gekennzeichnet,**
**dass** der Airbag (2) eine unsymmetrische Form und vorzugsweise eine Ausbuchtung aufweist.

7. Kraftfahrzeug umfassend eine Lenkradanordnung nach den Ansprüchen 1 bis 6.

8. Verfahren zum Betreiben einer Lenkradanordnung mit einem einen Airbag (2) aufweisenden Lenkrad (1), wobei die Lenkradanordnung einen von einer Steuerungseinrichtung (8) ansteuerbaren Aktor (4, 5, 6) zum Bewegen des Airbags oder des den Airbag (2) aufweisenden Lenkrads (1) aufweist, wobei die Steuerungseinrichtung (8) den Aktor (4, 5, 6) bei einer bevorstehenden Auslösung des Airbags (2) so ansteuert, dass dieser den Airbag (2) oder das den Airbag (2) aufweisenden Lenkrad (1) in eine für die Auslösung des Airbags (2) günstige Position bewegt, **dadurch gekennzeichnet,**
**dass** der Aktor (4) den Airbag (2) um die Drehachse des Lenkrads (1) relativ zum Lenkrad (1) in eine neutrale Position dreht.

9. Verfahren nach Anspruch 8,
**dadurch gekennzeichnet,**
**dass** die Steuerungseinrichtung (8) bei einer bevorstehenden Auslösung des Airbags (2) ein Mittel (7) ansteuert, das den Airbag (2) und/oder das den Airbag aufweisende Lenkrad (1) von einer Lenkung eines Kraftfahrzeugs entkoppelt.

10. Verfahren nach Anspruch 8 oder 9,
**dadurch gekennzeichnet,**
**dass** die Steuerungseinrichtung (8) bei einer bevorstehenden Auslösung des Airbags (2) den Aktor (4) ansteuert, der den Airbag (2) relativ zum Lenkrad (1) oder das den Airbag (2) aufweisende Lenkrad (1) in die neutrale Position verkippt.

11. Verfahren nach einem der Ansprüche 8 bis 10,
**dadurch gekennzeichnet,**
**dass** die Steuerungseinrichtung (8) bei einer bevorstehenden Auslösung des Airbags (2), den Airbag (2) oder das den Airbag (2) aufweisende Lenkrad (1) um eine Achse des Kraftfahrzeugs kippt.

## Claims

1. Steering-wheel assembly, comprising a steering wheel (1) having an airbag (2), wherein the steering-wheel assembly has at least one actuator (4, 5, 6) controllable by a control device (8) for moving the airbag (2) or the steering wheel (1) having the airbag (2), wherein the control device (8) is designed such that in the event of an imminent deployment of the airbag (2), the control device controls the actuator (4, 5, 6) in such a manner that the actuator moves the airbag (2) or the steering wheel (1) having the airbag (2) into a position favourable for the deployment of the airbag (2),
**characterised in**
**that** the airbag (2) is arranged relative to the steering wheel (1) by means of the actuator (4) so as to be rotatable about the rotational axis of the steering wheel (1) in or on the steering wheel (1).

2. Steering-wheel assembly according to claim 1,
**characterised in**
**that** information relating to an imminent deployment of the airbag (2) can be supplied to the control device (8) by a device for detecting the vehicle surroundings.

3. Steering-wheel assembly according to claim 1 or 2,
**characterised in**
**that** the airbag (2) is arranged tiltably in or on the steering wheel (1).

4. Steering-wheel assembly according to any of the preceding claims,
**characterised in**
**that** it has a means (7) for decoupling the steering wheel (1) having the airbag (2) from a steering system.

5. Steering-wheel assembly according to any one of the preceding claims,
**characterised in**
**that** the airbag (2) has a cuboid shape in a folded state and/or in an inflated state (10).

6. Steering-wheel assembly according to any one of the preceding claims,
**characterised in**
**that** the airbag (2) has an asymmetrical shape and preferably a bulge.

7. Motor vehicle comprising a steering-wheel assembly according to claims 1 to 6.

8. Method for operating a steering-wheel assembly with a steering wheel (1) having an airbag (2), wherein the steering-wheel assembly has an actuator (4, 5, 6) controllable by a control device (8) for moving the airbag or the steering wheel (1) having the airbag (2), wherein the control device (8) controls the actuator (4, 5, 6) in the event of an imminent deployment of the airbag (2) such that the actuator moves the airbag (2) or the steering wheel (1) having the airbag (2) into a position favourable for the deployment of the airbag (2),
**characterised in**
**that** the actuator (4) rotates the airbag (2) about the rotational axis of the steering wheel (1) relative to the steering wheel (1) into a neutral position.

9. Method according to claim 8,
**characterised in**
**that** the control device (8) in the event of an imminent deployment of the airbag (2) controls a means (7), which decouples the airbag (2) and/or the steering wheel (1) having the airbag from a steering system of a motor vehicle.

10. Method according to claim 8 or 9,
**characterised in**
**that** the control device (8) in the event of an imminent deployment of the airbag (2) controls the actuator (4), which tilts the airbag (2) relative to the steering wheel (1) or the steering wheel (1) having the airbag (2) into the neutral position.

11. Method according to any one of claims 8 to 10.
**characterised in**
**that** the control device (8) in the event of an imminent deployment of the airbag (2) tilts the airbag (2) or the steering wheel (1) having the airbag (2) about an axis of the motor vehicle.

## Revendications

1. Ensemble volant de direction avec un volant de direction (1) présentant un coussin gonflable (2), dans lequel l'ensemble volant de direction présente au moins un actionneur (4, 5, 6) commandable par un dispositif de commande (8) pour le déplacement du coussin gonflable (2) ou du volant de direction (1) présentant le coussin gonflable (2), dans lequel le dispositif de commande (8) est réalisé de sorte qu'il commande l'actionneur (4, 5, 6) en cas de déclenchement imminent du coussin gonflable (2) afin que celui-ci déplace le coussin gonflable (2) ou le volant de direction (1) présentant le coussin gonflable (2) dans une position propice au déclenchement du coussin gonflable (2),
**caractérisé en ce**
**que** le coussin gonflable (2) est disposé par rapport au volant de direction (1) au moyen de l'actionneur (4) de manière à pouvoir tourner autour de l'axe de rotation du volant de direction (1) dans ou au niveau du volant de direction (1).

2. Ensemble volant de direction selon la revendication 1,
**caractérisé en ce**
**que** des informations concernant un déclenchement imminent du coussin gonflable (2) peuvent être transmises au dispositif de commande (8) par un dispositif pour la détection de l'environnement de véhicule.

3. Ensemble volant de direction selon la revendication 1 ou 2,
**caractérisé en ce**
**que** le coussin gonflable (2) est disposé de manière basculable dans ou au niveau du volant de direction (1).

4. Ensemble volant de direction selon l'une quelconque des revendications précédentes,
**caractérisé en ce**
**qu'**il présente un moyen (7) pour le découplage du volant de direction (1) présentant le coussin gonflable (2) d'une direction.

5. Ensemble volant de direction selon l'une quelconque des revendications précédentes,
**caractérisé en ce**
**que** le coussin gonflable (2) est en forme de parallélépipède dans un état plié et/ou dans un état gonflé (10).

6. Ensemble volant de direction selon l'une quelconque des revendications précédentes,
**caractérisé en ce**
**que** le coussin gonflable (2) présente une forme asymétrique et de préférence un renflement.

7. Véhicule automobile comprenant un ensemble volant de direction selon les revendications 1 à 6.

8. Procédé de fonctionnement d'un ensemble volant de direction avec un volant de direction (1) présentant un coussin gonflable (2), dans lequel l'ensemble volant de direction présente un actionneur (4, 5, 6) commandable par un dispositif de commande (8) pour le déplacement du coussin gonflable ou du volant de direction (1) présentant le coussin gonflable (2), dans lequel le dispositif de commande (8) commande l'actionneur (4, 5, 6) en cas de déclenchement imminent du coussin gonflable (2) de sorte que celui-ci déplace le coussin gonflable (2) ou le volant de direction (1) présentant le coussin gonflable (2) dans une position propice au déclenchement du coussin gonflable (2),
**caractérisé en ce**
**que** l'actionneur (4) tourne le coussin gonflable (2) autour de l'axe de rotation du volant de direction (1) par rapport au volant de direction (1) dans une position neutre.

9. Procédé selon la revendication 8,
**caractérisé en ce**
**que** le dispositif de commande (8) commande un moyen (7) en cas de déclenchement imminent du coussin gonflable (2), qui découple le coussin gonflable (2) et/ou le volant de direction (1) présentant le coussin gonflable d'une direction d'un véhicule automobile.

10. Procédé selon la revendication 8 ou 9,
**caractérisé en ce**
**que** le dispositif de commande (8) commande, en cas de déclenchement imminent du coussin gonflable (2), l'actionneur (4) qui bascule le coussin gonflable (2) par rapport au volant de direction (1) ou le volant de direction (1) présentant le coussin gonflable (2) dans la position neutre.

11. Procédé selon l'une quelconque des revendications 8 à 10,
**caractérisé en ce**
**que** le dispositif de commande (8) bascule, en cas de déclenchement imminent du coussin gonflable (2), le coussin gonflable (2) ou le volant de direction (1) présentant le coussin gonflable (2) autour d'un axe du véhicule automobile.
